# EUROPEAN PATENT APPLICATION

(11) **EP 4 459 898 A1**
(43) Date of publication of application: **06.11.2024**
(21) Application number: 22915104.8
(22) Date of filing: 29.12.2022
(51) Int. Cl.: H04B 17/391, G06N 20/00, G06N 3/08

(54) **MODEL UPDATING METHOD AND COMMUNICATION DEVICE**

(30) Priority: 30.12.2021 CN 202111652530
(71) Applicant: VIVO MOBILE COMMUNICATION CO., LTD., Dongguan, Guangdong 523863 (CN)
(72) Inventor: JIA, Chenglu, Dongguan, Guangdong 523863 (CN); YANG, Ang, Dongguan, Guangdong 523863 (CN); SUN, Peng, Dongguan, Guangdong 523863 (CN)
(74) Representative: Murgitroyd & Company
(86) International application number: PCT/CN2022/143594
(87) International publication number: WO 2023/125855

(57) **Abstract**

This application discloses a method for updating a model and a communication device, belonging to the technical field of communication. The method for updating a model disclosed in embodiments of this application includes: obtaining, by a first communication device, model updating information; and updating, by the first communication device, a time series prediction model used by the first communication device according to the model updating information, the time series prediction model being used for executing a prediction task, where the model updating information includes at least one of the following: updating information of a kernel function; updating information of model hyper-parameters; updating information of a prediction mode; and updating information of a computing mode.

## Description

### CROSS-REFERENCE TO RELATED APPLICATIONS

This application claims the priority of Chinese Patent Application No. 202111652530.0 filed on December 30, 2021, which is incorporated herein by reference in its entirety.

### TECHNICAL FIELD

This application belongs to the technical field of communication, and specifically relates to a method for updating a model and a communication device.

### BACKGROUND

With the increasing mobility of communication scenarios, such as non-terrestrial networks (Non-Terrestrial Network, NTN), high-speed rail, and other high-mobility scenarios, the rapid changes in the scattering environment around communication devices result in a significant reduction in the coherence time of wireless channels. In other words, the detection results of wireless channels by communication devices will quickly fail, so more frequent wireless channel detection must be carried out to maintain good communication performance.

Time series prediction is a method for communication devices to predict future communication measurements based on observations of past communication measurements. Therefore, time series prediction models are widely applied in predicting key parameters related to time series in wireless communication networks. Common time series prediction models include Gaussian process (Gaussian Process, GP), which achieves good prediction performance with lower model storage, computing and parameter interaction overhead.

However, in certain scenarios (such as changes in prediction tasks and/or prediction requirements), in order to ensure the prediction performance of time series prediction models, the model parameters of time series prediction models may need to be updated. Therefore, how to update the model parameters of time series prediction models has become an urgent problem to be solved.

### SUMMARY

Embodiments of this application provide a method for updating a model and a communication device, which can solve the problem of how to update model parameters of a time series prediction model.

According to a first aspect, this application provides a method for updating a model, including: obtaining, by a first communication device, model updating information; and updating, by the first communication device, a time series prediction model used by the first communication device according to the model updating information, the time series prediction model being used for executing a prediction task, the model updating information including at least one of the following: updating information of a kernel function; updating information of model hyper-parameters; updating information of a prediction mode; and updating information of a computing mode.

According to a second aspect, this application provides a method for updating a model, including: transmitting, by a second communication device, model updating information to a first communication device, the model updating information being used for updating a time series prediction model used by the first communication device, the time series prediction model being used for executing a prediction task, the model updating information including at least one of the following: updating information of a kernel function; updating information of model hyper-parameters; updating information of a prediction mode; and updating information of a computing mode.

According to a third aspect, this application provides an apparatus for updating a model, including an acquisition module and an updating module, the acquisition module being configured to obtain model updating information; the updating module being configured to update a time series prediction model used by the first communication device according to the model updating information, the time series prediction model being used for executing a prediction task, the model updating information including at least one of the following: updating information of a kernel function; updating information of model hyper-parameters; updating information of a prediction mode; and updating information of a computing mode.

According to a fourth aspect, this application provides an apparatus for updating a model, including a transmitting module, the transmitting module being configured to transmit model updating information to a first communication device, the model updating information being used for updating a time series prediction model used by the first communication device, the time series prediction model being used for executing a prediction task, the model updating information including at least one of the following: updating information of a kernel function; updating information of model hyper-parameters; updating information of a prediction mode; and updating information of a computing mode.

According to a fifth aspect, this application provides a communication device. The terminal includes a processor and a memory, the memory storing a program or an instruction executable on the processor, the program or the instruction, when executed by the processor, implementing the steps of the method for updating a model according to the first aspect or the second aspect.

According to a sixth aspect, this application provides a communication device, including a processor and a communication interface, the communication interface being configured to obtain model updating information in a case that the communication device is a first communication device; the processor being configured to update a time series prediction model used by the first communication device according to the model updating information; or the communication interface being configured to transmit model updating information to a first communication device in a case that the communication device is a second communication device, the model updating information being used for updating a time series prediction model used by the first communication device, the time series prediction model being used for executing a prediction task, the model updating information including at least one of the following: updating information of a kernel function; updating information of model hyper-parameters; updating information of a prediction mode; and updating information of a computing mode.

According to a seventh aspect, this application provides a communication system, including: a terminal and a network-side device, the terminal being configured to execute the steps of the method for updating a model according to the first aspect, the network-side device being configured to execute the steps of the method for updating a model according to the second aspect; or the network-side device being configured to execute the steps of the method for updating a model according to the first aspect, the terminal being configured to execute the steps of the method for updating a model according to the second aspect.

According to an eighth aspect, this application provides a readable storage medium, storing a program or an instruction, the program or the instruction, when executed by a processor, implementing the steps of the method for updating a model according to the first aspect, or the steps of the -method for updating a model according to the second aspect.

According to a ninth aspect, this application provides a chip, including a processor and a communication interface coupled to the processor, the processor being configured to run a program or an instruction to implement the method for updating a model according to the first aspect or the method for updating a model according to the second aspect.

According to a tenth aspect, this application provides a computer program product, stored in a storage medium the computer program/program product being configured to be executed by at least one processor to implement the steps of the method for updating a model according to the first aspect or the second aspect.

In the embodiments of this application, a first communication device obtains model updating information; and the first communication device updates a time series prediction model used by the first communication device according to the model updating information. The time series prediction model is used for executing a prediction task. The model updating information includes at least one of the following: updating information of a kernel function; updating information of model hyper-parameters; updating information of a prediction mode; and updating information of a computing mode. By adopting this solution, since the kernel function, the model hyper-parameters, the prediction mode, and the computing mode are all parameter information of the time series prediction model, after the first communication device obtains the model updating information, the first communication device can update the time series prediction model used by the first communication device according to the model updating information, so that the time series prediction model can execute a prediction task more accurately, thus enabling the first communication device to achieve good communication performance.

### BRIEF DESCRIPTION OF THE DRAWINGS

FIG. 1 is a schematic diagram of a wireless communication system according to an embodiment of this application.
FIG. 2 is a schematic diagram of a neural network according to an embodiment of this application.
FIG. 3 is a schematic diagram of neurons according to an embodiment of this application.
FIG. 4 is a schematic diagram of changes of a normalized mean squared error of different training window sizes with prediction time units according to an embodiment of this application.
FIG. 5 is a schematic diagram of a smooth-turn movement trajectory of moving speed of a terminal according to an embodiment of this application.
FIG. 6 is a schematic diagram of average errors of prediction performed by adopting different sampling intervals according to an embodiment of this application.
FIG. 7 is a flowchart of a method for updating a model according to an embodiment of this application.
FIG. 8 is a schematic structural diagram of an apparatus for updating a model according to an embodiment of this application.
FIG. 9 is a schematic structural diagram of another apparatus for updating a model according to an embodiment of this application.
FIG. 10 is a schematic structural diagram of a communication device according to an embodiment of this application.
FIG. 11 is a schematic diagram of hardware of a communication device according to an embodiment of this application.

### DETAILED DESCRIPTION

The technical solutions in the embodiments of this application will be clearly described below with reference to the accompanying drawings in the embodiments of this application. Apparently, the described embodiments are merely some rather than all of the embodiments of this application. All other embodiments obtained by a person skilled in the art based on the embodiments of this application still fall within the scope of protection of this application.

Terms such as "first" and "second" in the description and claims of this application are used for distinguishing similar objects, instead of describing a specific order or sequence. It is to be understood that terms used in this way are exchangeable in a proper case, so that the embodiments of this application can be implemented in an order different from the order shown or described herein; and the objects distinguished by "first" and "second" are usually of the same class and the number of the objects is not limited; for example, the number of first objects may be one or more. In addition, "and/or" in the description and claims represents at least one of the connected objects. The character "P' generally represents an "or" relationship between the associated objects.

It is worth pointing out that the technologies described in the embodiments of this application are not limited to long term evolution (Long Term Evolution, LTE)/LTE-advanced (LTE-Advanced, LTE-A) systems, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. The terms "system" and "network" in the embodiments of this application can be usually exchanged in use. The technologies described not only can be applied to the systems and radio technologies mentioned above, but also can be applied to other systems and radio technologies. However, the following description describes the new radio (New Radio, NR) system for example purposes and uses NR terminology in most of the following description, although these technologies can also be applied to applications other than NR system applications, such as 6th generation (6th Generation, 6G) communication systems.

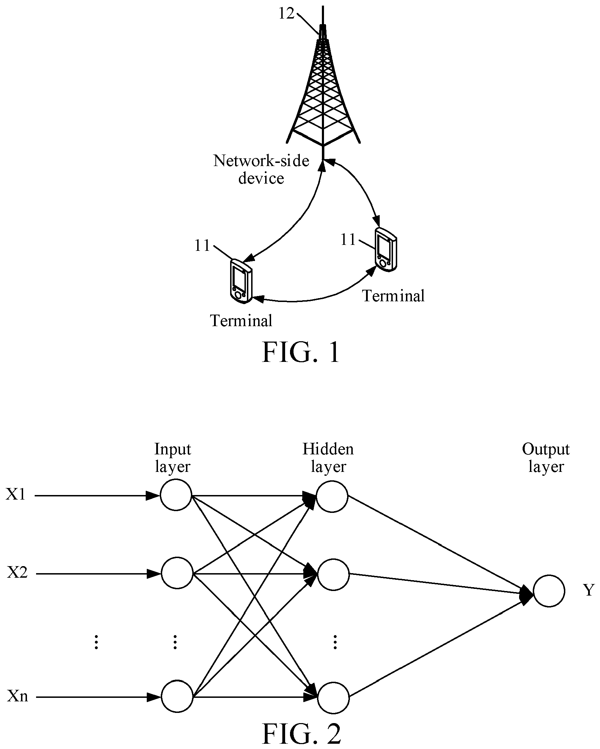

FIG. 1 is a block diagram of a wireless communication system applicable in an embodiment of this application. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a hand-held computer, a netbook, an ultra-mobile personal computer (Ultra-Mobile Personal Computer, UMPC). a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), smart home (home devices with wireless communication functions, such as refrigerators, televisions, washing machines, or furniture), a game console, a personal computers (Personal Computer, PC), an ATM or a self-service machine. The wearable device includes a smart watch, a smart bracelet, a smart headphone, smart glasses, a smart jewelry (smart bracelet, smart chain bracelet, smart ring, smart necklace, smart anklet, smart chain anklet, etc.), a smart wristband, smart clothing, etc. It is to be understood that the specific type of the terminal 11 is not limited in the embodiments of this application. The network-side device 12 may include an access network device or a core network device. The access network device 12 may also be referred to as a wireless access network device, a radio access network (Radio Access Network, RAN), a wireless access network function, or a wireless access network unit. The access network device 12 may include a base station, a wireless local area network (Wireless Local Area Network, WLAN) access point, a wireless fidelity (Wireless Fidelity, WiFi) node, etc. The base station may be referred to as node B, evolved node B (eNB), access point, base transceiver station (Base Transceiver Station, BTS), radio base station, radio transceiver, basic service set (Basic Service Set, BSS), extended service set (Extended Service Set, ESS), home node B, home evolved node B, transmission reception point (Transmission Reception Point, TRP), or some other suitable terms in the field, as long as the same technical effect is achieved. The base station is not limited to specific technical terms. It is to be understood that description is made by using only a base station in an NR system as an example in the embodiments of this application, but the specific type of the base station is not limited. The core network device may include, but not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscription server (Home Subscription Server, HSS) centralized network configuration (Centralized Network Configuration, CNC), a network repository function (Network Repository Function, NRF), a network exposure function (Network Exposure Function, NEF), local NEF (Local NEF or L-NEF), a binding support function (Binding Support Function, BSF), an application function (Application Function, AF), etc. It is to be understood that description is made by using only a core network device in an NR system as an example in the embodiments of this application, but the specific type of the core network device is not limited.

Due to the explosive growth of mobile devices and mobile traffic, as well as the emergence of massive application scenarios, future wireless communication networks have various indicator requirements such as high speed, low delay, and enhanced mobility. Especially for mobility enhancement, in various high mobility scenarios such as NTN and high-speed rail, due to the rapid changes in the surrounding scattering environment, the coherence time of wireless channels is severely shortened, so that the detection results of wireless channels by communication devices (for example, wireless communication devices, such as terminals and base stations) will quickly fail. Therefore, communication devices must detect wireless channels more frequently to maintain good communication performance. This poses a huge challenge to the load and energy consumption of the network. Time series prediction is a method used by communication devices to predict future communication measurements based on observations of past communication measurements. Essentially, it is to explore the temporal correlation between the future and the history based on historical measurement data.

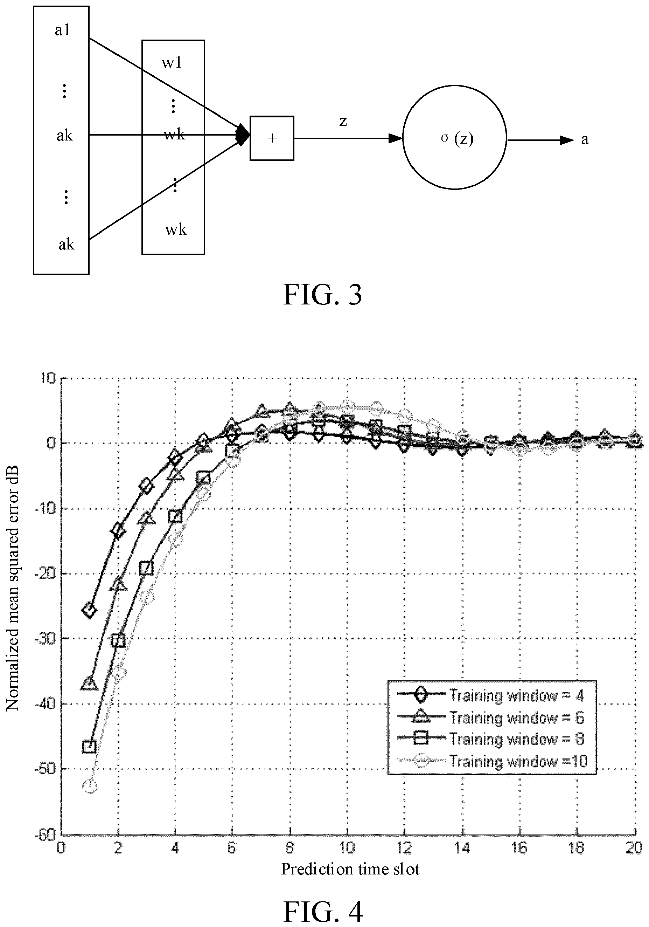

At present, artificial intelligence (Artificial Intelligence, AI) has been widely applied in various fields. Integrating AI into wireless communication networks, significantly improving technical indicators such as throughput, delay, and user capacity, is an important task for future wireless communication networks. There are various implementation methods for AI modules, such as neural networks, decision trees, support vector machines, Bayesian classifiers, etc. Description will be made in this application by taking a neural network as an example, but the specific type of the AI module is not limited. Refer to FIG. 2, which is a schematic diagram of a neural network. The neural network is composed of neurons. The schematic diagram of the neurons is as shown in FIG. 3, where a1, a2,..., aK are input quantities, w is a weight (multiplicative coefficient), b is a bias (additive coefficient), and σ (.) is an activation function. Common activation functions may include Sigmoid, tanh, rectified linear unit (Rectified Linear Unit, ReLU), and so on.

Parameters of the neural networks may be optimized by using gradient optimization algorithms. Gradient optimization algorithms are a type of algorithms that minimize or maximize an objective function (also known as loss function). Loss function is often a mathematical combination of model parameters and data. For example, given data x and its corresponding label Y, after constructing a neural network model f( ), based on input x, a predicted output f(x) may be obtained, and a difference (f(x)-Y) between a predicted value and a true value may be calculated, which is called loss function. When constructing the model, it is necessary to determine appropriate W and b to minimize the value of the loss function. The smaller the value of the loss function, the closer the model is to the real situation, that is, the higher the accuracy of the model.

Most optimization algorithms are based on an error back propagation (Error Back Propagation, BP) algorithm. The basic idea of the BP algorithm is that the learning process is composed of two processes, i.e., forward propagation of signals and back propagation of errors. During forward propagation, input samples are passed in from an input layer, processed layer by layer by each hidden layer, and then transmitted to an output layer. If the actual output of the output layer does not match the expected output, it enters the back propagation stage of the error. Error back propagation is a process of transmitting an output error in a certain form through hidden layers layer by layer to the input layer, and distributing the error to all units in each layer to obtain an error signal of each unit. This error signal serves as a basis for correcting the weight of each unit. The process of adjusting the weight of each layer in signal forward propagation and error back propagation is repetitively carried out. The process of continuously adjusting the weight is the learning and training process of the neural network. This process continues until the error outputted by the network is reduced to an acceptable level, or until a predetermined number of learning iterations are reached.

Exemplarily, optimization algorithms may include gradient descent (Gradient Descent), stochastic gradient descent (Stochastic Gradient Descent, SGD), mini-batch gradient descent (Mini-Batch Gradient Descent), momentum (Momentum), stochastic gradient descent with momentum (Nesterov), adaptive gradient descent (ADAptive GRADient descent, Adagrad), Adadelta, root mean square prop (Root Mean Square prop RMSprop), adaptive moment estimation (Adaptive Moment Estimation, Adam), etc. These optimization algorithms, during error back propagation, are based on the error/loss obtained from the loss function, taking the derivative/partial derivative of the current neuron, adding the influence of learning rate and previous gradient/derivative/partial derivative to obtain the gradient, and passing the gradient on to a previous layer.

GP is a commonly used time series prediction model. GP is a machine learning method developed based on statistical learning theory and Bayesian theory, suitable for handling complex regression and classification problems with high dimensions, small samples and nonlinearity, and has strong generalization ability. Compared with methods such as neural networks, GP has the advantages of easy implementation, small sample training, adaptive hyper-parameter acquisition, flexible non parametric inference, interpretability, and probabilistic output, and has the potential to solve complex time series prediction problems in future wireless communication systems.

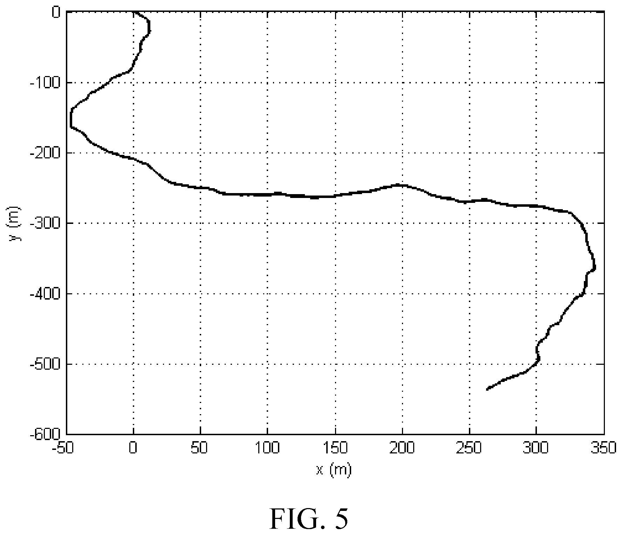

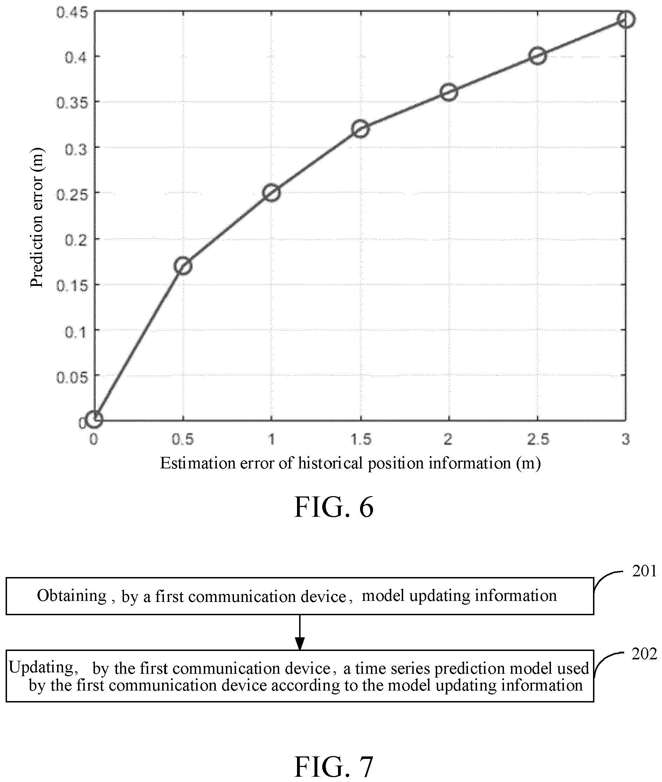

Simulation results show that GP has good prediction performance for variables with strong temporal correlation such as CSI and position. For CSI prediction, FIG. 4 shows changes of a normalized mean squared error (normalized mean squared error, NMSE) of different training window sizes with prediction time units at moving speed of 30 km/h. Even when the training window size is only 4 time units, reliable results can still be obtained for the initial 2 time units of CSI prediction, and the prediction accuracy gradually decreases with time. For position prediction, under the smooth-turn movement trajectory at terminal moving speed of 15 km/h shown in FIG. 5, FIG. 6 shows prediction of positions of next 5 time units (such as 200th, 210th, 220, 230th, 240th time units) at a position sampling interval of 10 time units based on positions of historical 20 time units (such as 0th, 10th, 20th, 30th,..., 190th time units). The predicted average position error changes with the position estimation error (the positions of historical 20 time units is estimated through the position reference signal PRS). Even if the estimation error of historical position information is 3 m, the prediction error is still less than 0.5 m.

Methods for updating a model provided in embodiments of this application will be described below in detail through some embodiments and application scenarios with reference to the drawings.

Referring to FIG. 7, an embodiment of this application provides a method for updating a model. The method for updating a model can be applied to the wireless communication system shown in FIG. 1. The method may include step 201 and step 202.

In step 201, a first communication device obtains model updating information.

In step 202, the first communication device updates a time series prediction model used by the first communication device according to the model updating information.

The time series prediction model may be used for executing a prediction task. The model updating information may include at least one of the following:
updating information of a kernel function;
updating information of model hyper-parameters;
updating information of a prediction mode; and
updating information of a computing mode.

It is to be understood that in this embodiment of this application, the model updating information may also include any other possible updating information, which may be specifically determined according to actual use requirements and is not limited in this embodiment of this application.

In this embodiment of this application, after the first communication device obtains model updating information (for example, at least one of updating information of a kernel function, updating information of model hyper-parameters, updating information of a prediction mode and updating information of a computing mode), the first communication device can update a time series prediction model used by the first communication device according to the model updating information, so that the time series prediction model can execute the prediction task more accurately. In this way, the first communication device can achieve good communication performance.

Optionally, in this embodiment of this application, the prediction mode may include a structure of a time window for the prediction task. The structure of the time window may include at least one of the following:
a length of time units in a training window of the time series prediction model;
a length of time units in a prediction window of the time series prediction model;
an interval of adjacent time units in the training window of the time series prediction model; and
an interval of adjacent time units in the prediction window of the time series prediction model.

Optionally, in this embodiment of this application, the prediction task may include at least one of position prediction and channel prediction (such as channel state information (Channel State Information, CSI) prediction).

Of course, during actual implementation, the prediction task involved in this embodiment of this application may also include any other possible task, which may be specifically determined according to actual use requirements and is not limited in this embodiment of this application.

Optionally, in this embodiment of this application, the time unit may include, but not limited to, reference signal period, prediction period, time slot, half time slot, symbol (such as orthogonal frequency division multiplex (Orthogonal Frequency Division Multiplex, OFDM) symbol), sub-frame, radio frame, millisecond and second, which may be specifically determined according to actual usage requirements.

In this embodiment of this application, the length of time units in a training window of the time series prediction model refers to number of consecutive time units contained in one training window. Correspondingly, the length of time units in a prediction window of the time series prediction model refers to number of consecutive time units contained in one prediction window. There is one data input or output on each time unit, that is, one time unit corresponds to one data.

Exemplarily, it is assumed that the prediction task is to predict CSI, that is, to predict future M time units of CSI based on past N time units, the length of time units in a training window of the time series prediction model is N, and the length of time units in a prediction window of the time series prediction model is M. In addition, the interval of adjacent time units in the training window of the time series prediction model is 2, and the interval of adjacent time units in the prediction window of the time series prediction model is 2. Therefore, according to the CSI of 0, 2,..., 2N time units, the CSI of 2N+2, 2N+4,..., 2N+2M time units can be predicted.

Optionally, in this embodiment of this application, the model updating information may include at least one of the following:
an identity of a prediction task to be updated (also called target task);
an identity of a model to be updated (also called target model, such as time series prediction model in this embodiment of this application); and
timestamp information for updating the model to be updated.

It is to be understood that in this embodiment of this application, the first communication device may be a terminal or a network-side device, which may be specifically determined according to actual use requirements and is not limited in this embodiment of this application.

Optionally, the network-side device mentioned in this embodiment of this application may be:
a) a core network node, including a network data analysis function (NetWork Data Analytics Function, NWDAF), a location management function (Location Management Function, LMF), or a neural network processing node;
b) an access network node, including a base station or a newly defined neural network processing node; or
c) a combination of multiple nodes mentioned above.

In some embodiments, the first communication device may directly determine the model updating information according to information such as prediction task and/or prediction requirement.

In some other embodiments, the first communication device may receive the model updating information from a second communication device.

For the some other embodiments, step 202 may be specifically implemented through step 203 and 202a.

In step 203, the second communication device transmits model updating information to the first communication device.

In step 202a, the first communication device receives the model updating information from the second communication device.

Optionally, in this embodiment of this application, the second communication device may be a network-side device or a terminal. Exemplarily, in a case that the first communication device is a terminal, the second communication device may be a network-side device. In a case that the first communication device is a network-side device, the second communication device may be a terminal. It may be specifically determined according to actual use requirements and is not limited in this embodiment of this application.

Optionally, in this embodiment of this application, the first communication device may store the same prediction model list as the second communication device, and the prediction model list may include identities of prediction modes. Therefore, in a case that the model updating information includes updating information of a prediction mode, the first communication device may determine the prediction mode indicated by the updating information of the prediction mode from the prediction model list.

Correspondingly, the second communication device may store the same prediction model list as the first communication device, and the prediction model list may include identities of prediction modes, so that the second communication device can configure an appropriate prediction mode for the first communication device according to the prediction model list.

In this embodiment of this application, the second communication device may periodically transmit the model updating information to the first communication device, or non-periodically transmit the model updating information to the first communication device. It is to be understood that the first communication device may periodically update the time series prediction model or non-periodically update the time series prediction model.

Optionally, in this embodiment of this application, in a case that the second communication device may periodically transmit the model updating information to the first communication device, step 203 may be specifically implemented through step 203a.

In step 203a, the second communication device transmits the model updating information to the first communication device according to fourth information.

The fourth information may include at least one of the following:
prediction errors of the time series prediction model;
statistical information of model prediction errors of the time series prediction model;
mobility information of the first communication device;
statistical information of prediction results of the time series prediction model;
updating information of a prediction task of the time series prediction model;
updating information of a prediction performance requirement of the time series prediction model; and
environmental perception information.

It is to be understood that in this embodiment of this application, in a case that the prediction task and/or prediction performance requirement of the time series prediction model used by the first communication device have been updated, the second communication device may transmit the model updating information to the first communication device.

Optionally, In this embodiment of this application, the mobility information of the first communication device may include at least one of moving speed of the first communication device, beam switching information of the first communication device, and cell switching information of the first communication device.

Exemplarily, in a case that the moving speed of the first communication device is greater than a first preset threshold, the second communication device may transmit the model updating information to the first communication device; and/or, in a case that the beam switching frequency of the first communication device is greater than a second preset threshold, the second communication device may transmit the model updating information to the first communication device; and/or, in a case that the first communication device has completed cell handover, the second communication device may transmit the model updating information to the first communication device.

Optionally, in this embodiment of this application, the prediction task may include at least one of position prediction and channel prediction.

Optionally, in this embodiment of this application, the statistical information of prediction results of the time series prediction model may include a mean value of prediction results and/or a variance of prediction results.

Exemplarily, assuming that the prediction task is position prediction and the statistical information of prediction results is a variance of predicted positions, in a case that the variance of predicted positions by the first communication device is greater than a third preset threshold, the second communication device may transmit the model updating information to the first communication device.

Optionally, in this embodiment of this application, the prediction performance requirement may include at least one of prediction accuracy and computing delay. The prediction task may include at least one of position prediction and channel prediction.

Of course, during actual implementation, the prediction performance requirement and the prediction task involved in this embodiment of this application may also include any other possible performance requirement and task, which may be specifically determined according to actual use requirements and are not limited in this embodiment of this application.

Optionally, in this embodiment of this application, the environmental perception information may include, but not limited to, line of sight (Line Of Sight, LOS) environment, non-line of sight (Non-Line Of Sight, NLOS) environment, dense urban environment, and rural environment, which may be specifically determined according to actual use requirements.

Optionally, in this embodiment of this application, the first communication device may transmit a model updating request to the second communication device to obtain the model updating information. Based on this, before step 203, the method for updating a model provided in this embodiment of this application may further include step 204 and step 205.

In step 204, the first communication device transmits model updating request information to the second communication device.

In step 205, the second communication device receives the model updating request information from the first communication device.

The model updating request information may be used for requesting to obtain first updating information. The model updating information may include at least one of the following:
first updating information; and
second updating information except the first updating information.

It is to be understood that after the second communication device receives the model updating request information, the second communication device may transmit the first updating information requested to be obtained by the model updating request information to the first communication device according to the model updating request information, and/or transmit the second updating information except the first updating information to the first communication device.

Exemplarily, assuming that the first updating information indicated by the model updating request information is updating information of model hyper-parameters, the second communication device may transmit the updating information of model hyper-parameters to the first communication device, that is, the model updating information includes the first updating information; and/or, the second communication device transmits at least one of updating information of a kernel function, updating information of a prediction mode, and updating information of a computing mode to the first communication device, that is, the model updating information includes the second updating information except the first updating information.

Optionally, in this embodiment of this application, the model updating request information may also indicate a condition or event that triggers the updating of the time series prediction model.

Optionally, in this embodiment of this application, the first communication device may periodically or non-periodically transmit a model updating request to the second communication device to obtain the model updating information.

In some embodiments, step 204 may be specifically implemented through step 204a.

In step 204a, the first communication device transmits model updating request information to the second communication device according to first information.

The first information may include at least one of the following:
prediction errors of the time series prediction model;
statistical information of model prediction errors of the time series prediction model;
mobility information of the first communication device;
statistical information of prediction results of the time series prediction model; and
environmental perception information.

It is to be understood that in this embodiment of this application, for the explanatory description of the mobility information, prediction task, statistical information of prediction results, and environmental perception information of the first communication device, a reference may be made to the detailed description in the embodiment above. To avoid repetition, it will not be repeated here.

Exemplarily, in a case that the moving speed of the first communication device is greater than a first preset threshold, the first communication device may transmit the model updating request information to the second communication device; and/or, in a case that the beam switching frequency of the first communication device is greater than a second preset threshold, the first communication device may transmit the model updating request information to the second communication device; and/or, in a case that the first communication device has completed cell handover, the first communication device may transmit the model updating request information to the second communication device.

Exemplarily, assuming that the prediction task is position prediction and the statistical information of prediction results is a variance of predicted positions, in a case that the variance of predicted positions by the first communication device is greater than a third preset threshold, the first communication device may transmit the model updating request information to the second communication device.

It is to be understood that for step 204a, it is updating of the time series prediction model triggered by a condition.

In some other embodiments, step 204 may be specifically implemented through step 204b.

In step 204b, the first communication device transmits the model updating request information to the second communication device in a case that a first condition is satisfied.

The first condition may include at least one of the following:
that the first communication device has received model updating instruction information transmitted by the second communication device;
that a prediction task of the time series prediction model has been updated; and
that a prediction performance requirement of the time series prediction model has been updated.

It is to be understood that in this embodiment of this application, the model updating instruction information may be non-periodically (suddenly) transmitted to the first communication device by the second communication device. Therefore, after the first communication device receives the model updating instruction information, the first communication device may transmit the model updating request information to the second communication device, thus achieving the non-periodic updating of the time series prediction model.

It is to be understood that for step 204b, it is updating of the time series prediction model triggered by an event.

Optionally, the method for updating a model provided in this embodiment of this application may further include step 206 and step 207.

In step 206, the first communication device transmits first capacity information to the second communication device.

In step 207, the second communication device receives the first capacity information from the first communication device.

The first capacity information may be used for indicating at least one of the following:
a kernel function supported by the first communication device;
whether the first communication device has a prediction task;
a model optimizer configuration supported by the first communication device;
a model training configuration supported by the first communication device; and
a model prediction configuration supported by the first communication device.

It is to be understood that the first capacity information may be used for indicating the capacity of the first communication device to update the configuration of the time series prediction model.

In this embodiment of this application, the model optimizer configuration refers to a configuration of an optimizer used for updating the time series prediction model. Optionally, the optimizer configuration may include at least one of the type and state of the optimizer. Of course, during actual implementation, the optimizer configuration may also include other configuration information of the optimizer, which may be specifically determined according to actual use requirements and is not limited in this embodiment of this application.

In this embodiments of this application, the model training configuration may include the storage capacity and computing capacity of the first communication device, and the second communication device may configure corresponding model updating information for the first communication device according to the model training configuration. Exemplarily, assuming that the storage capacity and/or computing capacity of the first communication device is weak, the first communication device may not support a long training window size.

Optionally, in an embodiment, the second communication device may configure the time series prediction model to the first communication device. After the first communication device receives the configuration information of the time series prediction model, the first communication device can provide feedback to the second communication device on whether the first communication device supports the time series prediction model.

Based on this, the method for updating a model provided in this embodiment of this application may further include step 208 to step 211.

In step 208, the second communication device transmits a first model configuration to the first communication device.

In step 209, the first communication device receives the first model configuration from the second communication device.

In step 210, the first communication device transmits first feedback information to the second communication device.

In step 211, the second communication device receives the first feedback information from the first communication device.

The first feedback information may be used for indicating whether the first communication device supports the time series prediction model instructed by the first model configuration.

Exemplarily, assuming that the first communication device is a terminal and the second communication device is a network-side device, the network side device may firstly configure a time series prediction model to the terminal, and then the terminal reports to the network-side device whether it supports the time series prediction model configured by the network-side device.

Optionally, in another embodiment, the first communication device may firstly report the computing capacity of the first communication device to the second communication device, and then the second communication device may configure a time series prediction model to the first communication device according to the computing capacity.

Based on this, the method for updating a model provided in this embodiment of this application may further include step 212 to step 215.

In step 212, the first communication device transmits computing capacity information to the second communication device.

The computing capacity information may be used for indicating the computing capacity of the first communication device.

In step 213, the second communication device receives the computing capacity information from the first communication device.

In step 214, the second communication device transmits a second model configuration to the first communication device.

In step 215, the first communication device receives the second model configuration from the second communication device.

A time series prediction model instructed by the second model configuration may be determined according to at least one of the computing capacity of the first communication device, a processing delay, and a prediction performance requirement of the first communication device.

Exemplarily, assuming that the first communication device is a terminal and the second communication device is a network-side device, the terminal may firstly report the computing capacity of the terminal to the network-side device. Then, after the network-side device receives the computing capacity information, the network-side device may determine how to configure a time series prediction model to the terminal according to the computing capacity of the terminal, the processing delay and the prediction performance requirement of the time series prediction model, so that the network-side device can transmit the second model configuration to the terminal to configure the time series prediction model to the terminal.

Optionally, in this embodiment of this application, the processing delay may include, but not limited to, a delay of model loading, a delay of data reading-in and reading-out, and a delay of model computing, which may be specifically determined according to actual use requirements.

Optionally, the method for updating a model provided in this embodiment of this application may further include step 216 and step 217.

In step 216, the first communication device transmits second information or updating recommendation information of the time series prediction model to the second communication device.

In step 217, the second communication device receives the second information or updating recommendation information of the time series prediction model from the first communication device.

The model updating information is determined according to the second information.

Optionally, in this embodiment of this application, the updating recommendation information may include at least one of the following: recommendation information of a kernel function, recommendation information of model hyper-parameters, recommendation information of a prediction mode, and recommendation information of a computing mode. In this way, after the second communication device receives the updating recommendation information, the second communication device may transmit corresponding model updating information to the first communication device according to the updating recommendation information.

Certainly, during actual implementation, the updating recommendation information may also include any other possible recommendation information, which may be specifically determined according to actual use requirements.

Optionally, in this embodiment of this application, the second information may include at least one of the following:
statistical information of prediction results of the time series prediction model;
estimation errors of the time series prediction model;
statistical information of estimation errors of the time series prediction model;
model prediction errors of the time series prediction model;
statistical information of model prediction errors of the time series prediction model;
mobility information of the first communication device;
statistical information of noise; and
a prediction performance requirement of the time series prediction model.

In this embodiment of this application, the statistical information of estimation errors of the time series prediction model may be a mean value and/or a variance of estimation errors of the time series prediction model. Since GP predicts unknown information based on known information, the estimation errors of time series prediction model may be estimation errors of known information (historical information). For example, in channel state information (Channel State Information, CSI) prediction, the CSI of past N time units is estimated based on pilot (sounding reference signal (Sounding Reference Signal, SRS)), and there is an estimation error.

In this embodiment of this application, the statistical information of model prediction errors may be at least one of a mean value of model prediction errors and a variance of model prediction errors, which may be specifically determined according to actual use requirements.

Optionally, in this embodiment of this application, the statistical information of noise may include signal-to-noise ratio and signal-to-interference-plus-noise ratio. It may be specifically determined according to actual use requirements and is not limited in this embodiment of this application.

Optionally, in this embodiment of this application, in a case that the model updating information includes updating information of a computing mode, before step 203, the method for updating a model provided in this embodiment of this application may further include step 218 and step 219.

In step 218, the first communication device transmits second capacity information to the second communication device.

In step 219, the second communication device receives the second capacity information from the first communication device.

The second capacity information may include at least one of the following:
computing capacity information of the first communication device;
storage capacity information of the first communication device; and
computing unit configuration information of the first communication device.

It is to be understood that the second capacity information may be used for indicating the hardware capacity of the first communication device.

Optionally, in this embodiment of this application, the second capacity information may include at least one of the following:
maximum data amount supported to be cached by the first communication device, for example, maximum number of time units of CSI that can be cached;
maximum computing amount supported to be computed by the first communication device, for example, maximum number of time units of data contained in a training window of the time series prediction model; and
maximum number of parallel computing threads supported by the first communication device, for example, maximum number of sub-models that can be supported to be simultaneously trained in the time series prediction model.

In this embodiment of this application, the computing mode may include the following:
a) serial computing mode, in which a GP model (i.e., time series prediction model) is trained in the same computing unit, such as in a certain core of a CPU or a certain thread of a CPU;
b) parallel computing mode, in which a GP model (i.e., time series prediction model) is simultaneously trained in multiples computing units, such as in multiple cores of a CPU or multiple threads of a CPU.

Optionally, in a case that the model updating information instructs to update the computing mode of the time series prediction model to the parallel computing mode, the method for updating a model provided in this embodiment of this application may further include step 220 and step 221.

In step 220, the second communication device transmits third information to the first communication device.

In step 221, the first communication device receives the third information from the second communication device.

The third information may include at least one of the following:
a partitioning manner of a dataset, for example, partitioning a dataset into N parts, so that the length of time units of a training window of each sub-module of N sub-modules for training the time series prediction model becomes 1/N of the original length, by which the computing complexity can be reduced, since the computing complexity of GP is *O*(*n*³), where n is the number of samples in a training window, in a case that a dataset has a large number of samples, the computing complexity of GP is extremely high, so by partitioning a dataset into multiple sub-models for simultaneous training through parallel computing, the commutating complexity can be significantly reduced;
selection of an optimization goal, for example, weighted sum of multiple model edge functions;
selection of a model optimizer;
an initial state of the model optimizer; and
a fusion manner of multiple sub-model prediction results, for example, weighted sum of multiple sub-model prediction results.

It is to be understood that in this embodiment of this application, in order to reduce the computing complexity, a dataset may be partitioned into N parts to train N sub-models of the time series prediction model. In the training process, the N sub-models are trained together and have a common optimization goal or loss function. It is to be understood that the process of optimizing the optimization goal is a process of training the N sub-models simultaneously.

By adopting the method for updating a model provided in this embodiment of this application, since the kernel function, model hyper-parameters, prediction mode, and computing mode are all parameter information of the time series prediction model, after the first communication device obtains the model updating information, the first communication device can update the time series prediction model used by the first communication device according to the model updating information, so that the time series prediction model can execute a prediction task more accurately, thus enabling the first communication device to achieve good communication performance.

The method for updating a model provided in this embodiment of this application can be executed by an apparatus for updating a model. In this embodiment of this application, the apparatus for updating a model provided in this embodiment of this application is described by taking the apparatus for updating a model executing the method for updating a model as an example.

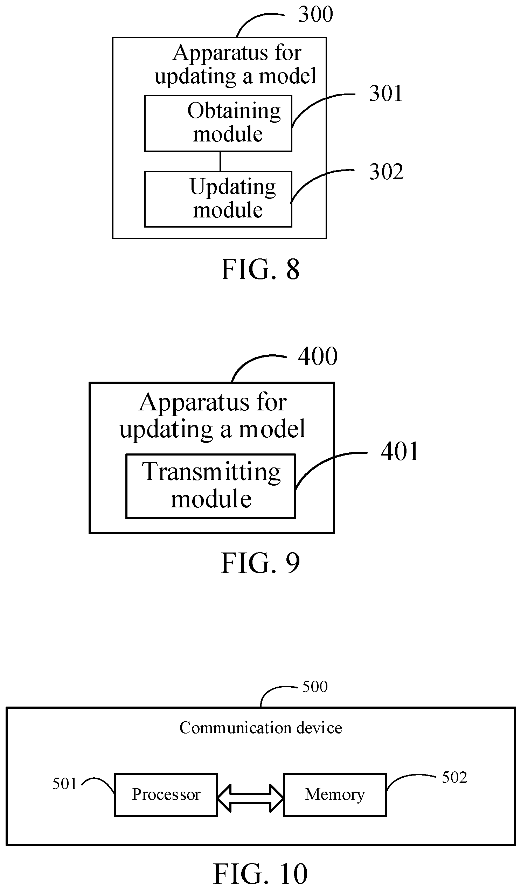

Referring to FIG. 8, an embodiment of this application provides an apparatus for updating a model 300. The apparatus for updating a model 300 may include an acquisition module 301 and an updating module 302. The acquisition module 301 may be configured to obtain model updating information. The updating module 302 may be configured to update a time series prediction model used by the first communication device according to the model updating information. The time series prediction model is used for executing a prediction task. The model updating information includes at least one of the following:
updating information of a kernel function;
updating information of model hyper-parameters;
updating information of a prediction mode; and
updating information of a computing mode.

Optionally, the acquisition module may include a receiving sub-module. The receiving sub-module may be configured to receive model updating information from a second communication device.

Optionally, the apparatus for updating a model may further include a transmitting module. The transmitting module may be configured to transmit model updating request information to the second communication device. The model updating request information is used for requesting to obtain first updating information, The model updating information includes at least one of the following:
first updating information; and
second updating information except the first updating information.

Optionally, the transmitting module may be specifically configured to transmit model updating request information to the second communication device according to first information. The first information includes at least one of the following:
prediction errors of the time series prediction model;
statistical information of model prediction errors of the time series prediction model;
mobility information of the first communication device;
statistical information of prediction results of the time series prediction model; and
environmental perception information.

Optionally, the transmitting module may be specifically configured to transmit the model updating request information to the second communication device in a case that a first condition is satisfied.

The first condition includes at least one of the following:
that the first communication device has received model updating instruction information transmitted by the second communication device;
that a prediction task of the time series prediction model has been updated; and
that a prediction performance requirement of the time series prediction model configured by the first communication device has been updated.

Optionally, the prediction performance requirement includes at least one of prediction accuracy and computing delay.

Optionally, the apparatus for updating a model may further include a transmitting module. The transmitting module may be configured to transmit first capacity information to the second communication device. The first capacity information is used for indicating at least one of the following:
a kernel function supported by the first communication device;
whether the first communication device has a prediction task;
a model optimizer configuration supported by the first communication device;
a model training configuration supported by the first communication device; and
a model prediction configuration supported by the first communication device.

Optionally, the apparatus for updating a model may further include a receiving module and a transmitting module. The receiving module may be configured to receive a first model configuration from the second communication device. The transmitting module may be configured to transmit first feedback information to the second communication device. The first feedback information is used for indicating whether the first communication device supports a time series prediction model instructed by the first model configuration.

Optionally, the apparatus for updating a model may further include a transmitting module and a receiving module. The transmitting module may be configured to transmit computing capacity information to the second communication device. The computing capacity information is used for indicating the computing capacity of the first communication device. The receiving module may be configured to receive a second model configuration from the second communication device. A time series prediction model instructed by the second model configuration is determined according to at least one of the computing capacity, a processing delay, and a prediction performance requirement of the time series prediction model.

Optionally, the apparatus for updating a model may further include a transmitting module. The transmitting module may be configured to transmit second information or updating recommendation information of the time series prediction model to the second communication device. The model updating information is determined according to the second information.

Optionally, the second information includes at least one of the following:
statistical information of prediction results of the time series prediction model;
estimation errors of the time series prediction model;
statistical information of estimation errors of the time series prediction model;
model prediction errors of the time series prediction model;
statistical information of model prediction errors of the time series prediction model;
mobility information of the first communication device;
statistical information of noise; and
a prediction performance requirement of the time series prediction model.

Optionally, the prediction mode includes a structure of a time window for the prediction task, and the structure of the time window includes at least one of the following:
a length of time units in a training window of the time series prediction model;
a length of time units in a prediction window of the time series prediction model;
an interval of adjacent time units in the training window of the time series prediction model; and
an interval of adjacent time units in the prediction window of the time series prediction model.

Optionally, the first communication device stores the same prediction model list as the second communication device, and the prediction model list includes identities of prediction modes.

Optionally, the model updating information includes updating information of the computing mode; the apparatus for updating a model may further include a transmitting module. The transmitting module may be configured to, before the receiving sub-module receives model updating information from the second communication device, transmit second capacity information to the second communication device. The second capacity information includes at least one of the following:
computing capacity information of the first communication device;
storage capacity information of the first communication device; and
computing unit configuration information of the first communication device.

Optionally, the second capacity information further includes at least one of the following:
maximum data amount supported to be cached by the first communication device;
maximum computing amount supported to be computed by the first communication device; and
maximum number of parallel computing threads supported by the first communication device.

Optionally, the updating information of the computing mode instructs to update the computing mode of the time series prediction model to a parallel computing mode. Optionally, the apparatus for updating a model may further include a receiving module. The receiving module may be configured to receive third information from the second communication device. The third information includes at least one of the following:
a partitioning manner of a dataset;
selection of an optimization goal;
selection of a model optimizer;
an initial state of the model optimizer; and
a fusion manner of multiple sub-model prediction results.

Optionally, the model updating information further includes at least one of the following:
an identity of a prediction task to be updated;
an identity of a model to be updated; and
timestamp information for updating the model to be updated.

By adopting the apparatus for updating a model provided in this embodiment of this application, since the kernel function, model hyper-parameters, prediction mode, and computing mode are all parameter information of the time series prediction model, after the apparatus for updating a model obtains the model updating information, the apparatus for updating a model can update the time series prediction model used by the first communication device according to the model updating information, so that the time series prediction model can execute a prediction task more accurately, thus enabling the first communication device to achieve good communication performance.

Referring to FIG. 9, an embodiment of this application provides an apparatus for updating a model 400. The apparatus for updating a model 400 may include a transmitting module 401. The transmitting module 401 may be configured to transmit model updating information to a first communication device. The model updating information is used for updating a time series prediction model used by the first communication device. The time series prediction model is used for executing a prediction task. The model updating information includes at least one of the following:
updating information of a kernel function;
updating information of model hyper-parameters;
updating information of a prediction mode; and
updating information of a computing mode.

Optionally, the transmitting module may be specifically configured to transmit model updating information to the first communication device according to fourth information. The fourth information includes at least one of the following:
prediction errors of the time series prediction model;
statistical information of model prediction errors of the time series prediction model;
mobility information of the first communication device;
statistical information of prediction results of the time series prediction model;
updating information of a prediction task of the time series prediction model;
updating information of a prediction performance requirement of the time series prediction model; and
environmental perception information.

Optionally, the apparatus for updating a model may further include a receiving module. The receiving module may be configured to receive model updating request information from the first communication device. The model updating request information is used for requesting to obtain first updating information. The model updating information includes at least one of the following:
first updating information; and
second updating information except the first updating information.

Optionally, the apparatus for updating a model may further include a receiving module. The receiving module may be configured to receive first capacity information from the first communication device. The first capacity information is used for indicating at least one of the following:
a kernel function supported by the first communication device;
whether the first communication device has a prediction task;
a model optimizer configuration supported by the first communication device;
a model training configuration supported by the first communication device; and
a model prediction configuration supported by the first communication device.

Optionally, the apparatus for updating a model may further include a receiving module. The transmitting module may be further configured to transmit a first model configuration to the first communication device. The receiving module may be configured to receive first feedback information from the first communication device. The first feedback information is used for indicating whether the first communication device supports a time series prediction model instructed by the first model configuration.

Optionally, the apparatus for updating a model may further include a receiving module. The receiving module may be configured to receive computing capacity information from the first communication device. The computing capacity information is used for indicating the computing capacity of the first communication device. The transmitting module may be further configured to transmit a second model configuration to the first communication device. A time series prediction model instructed by the second model configuration is determined according to at least one of the computing capacity, a processing delay, and a prediction performance requirement of the time series prediction model.

Optionally, the apparatus for updating a model may further include a receiving module. The receiving module may be configured to receive second information or updating recommendation information of the time series prediction model from the first communication device. The model updating information is determined according to the second information.

Optionally, the second information may include at least one of the following:
statistical information of prediction results of the time series prediction model;
estimation errors of the time series prediction model;
statistical information of estimation errors of the time series prediction model;
model prediction errors of the time series prediction model;
statistical information of model prediction errors of the time series prediction model;
mobility information of the first communication device;
statistical information of noise; and
a prediction performance requirement of the time series prediction model.

Optionally, the prediction mode includes a structure of a time window for the prediction task, and the structure of the time window includes at least one of the following:
a length of time units in a training window of the time series prediction model;
a length of time units in a prediction window of the time series prediction model;
an interval of adjacent time units in the training window of the time series prediction model; and
an interval of adjacent time units in the prediction window of the time series prediction model.

Optionally, the second communication device stores the same prediction model list as the first communication device, and the prediction model list includes identities of prediction modes.

Optionally, the model updating information includes updating information of the computing mode; the apparatus for updating a model may further include a receiving module. The receiving module may be configured to, before the transmitting module transmits model updating information to the first communication device, receive second capacity information from the first communication device. The second capacity information includes at least one of the following:
computing capacity information of the first communication device;
storage capacity information of the first communication device; and
computing unit configuration information of the first communication device.

Optionally, the second capacity information further includes at least one of the following:
maximum data amount supported to be cached by the first communication device;
maximum computing amount supported to be computed by the first communication device; and
maximum number of parallel computing threads supported by the first communication device.

Optionally, the updating information of the computing mode instructs to update the computing mode of the time series prediction model to a parallel computing mode, and the transmitting module is further configured to transmit third information to the first communication device. The third information includes at least one of the following:
a partitioning manner of a dataset;
selection of an optimization goal;
selection of a model optimizer;
an initial state of the model optimizer; and
a fusion manner of multiple sub-model prediction results.

Optionally, the model updating information further includes at least one of the following:
an identity of a prediction task to be updated;
an identity of a model to be updated; and
timestamp information for updating the model to be updated.

In this embodiment of this application, since the kernel function, model hyper-parameters, prediction mode, and computing mode are all parameter information of the time series prediction model, the apparatus for updating a model can transmit the model updating information to the first communication device, resulting in that the first communication device can update the time series prediction model used by the first communication device according to the model updating information, so that the time series prediction model can execute a prediction task more accurately, thus enabling the first communication device to achieve good communication performance.

In this embodiment of this application, the apparatus for updating a model may be a communication device, such as a communication device with an operating system, or a component within a communication device, such as an integrated circuit or chip. The communication device may be a terminal or any other device except a terminal, such as a network-side device. Exemplarily, the terminal may include but is not limited to the type of the terminal 11 listed above, and the other device may be a core network device or an access network device, a server, a network attached storage (Network Attached Storage, NAS) device or the like, which is not specifically limited in this embodiment of this application.

The apparatus for updating a model provided in this embodiment of this application can implement the various processes implemented in the embodiment of the method for updating a model and achieve the same technical effect. To avoid repetition, it will not be repeated here.

Optionally, referring to FIG. 10, an embodiment of this application further provides a communication device 500, which includes a processor 501 and a memory 502. A program or instruction executable on the processor 501 is stored on the memory 502. For example, in a case that the communication device 500 is a terminal, the program or instruction, when executed by the processor 501, implements the various steps of the embodiment of the method for updating a model, and can achieve the same technical effect. In a case that the communication device 500 is a network-side device, the program or instruction, when executed by the processor 501, implements the various steps of the embodiment of the method for updating a model, and can achieve the same technical effect. To avoid repetition, it will not be repeated here.

An embodiment of this application further provides a communication device, which includes a processor and a communication interface. The communication interface is configured to obtain model updating information in a case that the communication device is a first communication device. The processor is configured to update a time series prediction model used by the first communication device according to the model updating information. Alternatively, the communication interface is configured to transmit model updating information to a first communication device in case that the communication device is a second communication device. The model updating information is used for updating a time series prediction model used by the first communication device. The time series prediction model is used for executing a prediction task. The model updating information includes at least one of the following: updating information of a kernel function; updating information of model hyper-parameters; updating information of a prediction mode; and updating information of a computing mode. This communication device embodiment corresponds to the above method embodiment. The various implementation processes and modes in the above method embodiment are applicable to this communication device embodiment, and can achieve the same technical effect.

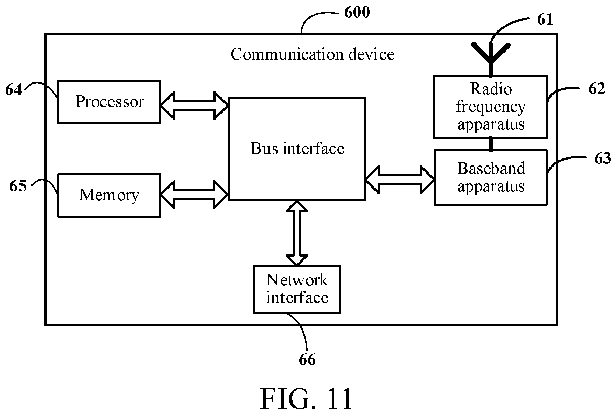

An embodiment of this application further provides a communication device. Referring to FIG. 11, a communication device 600 includes an antenna 61, a radio frequency apparatus 62, a baseband apparatus 63, a processor 64, and a memory 65. The antenna 61 is connected with the radio frequency apparatus 62. In an uplink direction, the radio frequency apparatus 62 receives information through the antenna 61 and transmits the received information to the baseband apparatus 63 for processing. In a downlink direction, the baseband apparatus 63 processes the information to be transmitted and transmits it to the radio frequency apparatus 62. The radio frequency apparatus 62 processes the received information and transmits it out through the antenna 61.

The method executed by the communication device (including the first communication device and the second communication device) in the above embodiments can be implemented in the baseband apparatus 63. The baseband apparatus 63 includes a baseband processor.

The baseband apparatus 63 may include, for example, at least one baseband board. Multiple chips are provided on the baseband board. Referring to FIG. 11, one chip, for example, is the baseband processor connected with the memory 65 through a bus interface and configured to call a program in the memory 65 and perform operations on the network-side device illustrated in the method embodiment.

The communication device may further include a network interface 66. The interface is, for example, a common public radio interface (Common Public Radio Interface, CPRI).

Specifically, the communication device 600 in this embodiment of this application further includes: an instruction or program stored in the memory 65 and executable on the processor 64. The processor 64 calls the instruction or program in the memory 65 to implement the method implemented by each module illustrated in FIG. 8 or FIG. 9 and achieve the same technical effect. To avoid repetition, it will not be repeated here.

An embodiment of this application further provides a readable storage medium. A program or instruction is stored on the readable storage medium. The program or instruction, when executed by the processor, implements the various processes of the embodiment of the method for updating a model, and can achieve the same technical effect. To avoid repetition, it will not be repeated here.

The processor is a processor in the terminal in the above embodiment. The readable storage medium may include a computer-readable storage medium, such as a Read-Only Memory (ROM), a Random Access Memory (RAM), a magnetic disk, an optical disc, or the like.

An embodiment of this application further provides a chip. The chip includes a processor and a communication interface coupled to the processor. The processor is configured to run a program or instruction to implement the various processes of the embodiment of the method for updating a model, and can achieve the same technical effect. To avoid repetition, it will not be repeated here.

It is to be understood that the chip provided in this embodiment of this application may also be referred to as system level chip, system chip, chip system, or system on chip.

An embodiment of this application further provides a computer program/program product. The computer program/program product is stored on a storage medium. The computer program/program product, when executed by at least one processor, implements the various processes of the embodiment of the method for updating a model, and can achieve the same technical effect. To avoid repetition, it will not be repeated here.

An embodiment of this application further provides a communication, system, which includes a terminal and a network-side device. The terminal may be configured to execute the steps of the method for updating a model above. The network-side device may be configured to execute the steps of the method for updating a model above.

It is to be understood that the terms "include", "comprise", or any other variation thereof herein is intended to cover a non-exclusive inclusion, which specifies the presence of stated processes, methods, objects, or apparatuses, but do not preclude the presence or addition of one or more other processes, methods, objects, or apparatuses. Without further limitations, the element limited by the statement 'including a...' does not preclude the presence of another identical element in a process, method, object or apparatus that includes that element. In addition, the scope of the methods and apparatuses in the embodiments of this application is not limited to performing functions in the order shown or discussed, but may also include performing functions in a substantially simultaneous manner or in the opposite order according to the involved functions. For example, the described methods may be executed in a different order from the described ones, and various steps may also be added, omitted or combined. In addition, features described with reference to certain examples may be combined in other examples.

Through the description of the above embodiments, those skilled in the art can clearly understand that the above embodiments may be implemented through software and necessary universal hardware platforms. Of course, they may also be implemented through hardware. However, in many cases, the former is better. Based on this understanding, the technical solution of this application, or the part that contributes to the existing technology, may be reflected in the form of a software product, which is stored in a storage medium (such as ROM/RAM, magnetic disc or optical disc), including several instructions to enable a terminal (which may be a mobile phone, a computer, a server, an air conditioner or a network-side device) to execute the methods described in the embodiments of this application.

The embodiments of this application have been described above with reference to the drawings. However, this application is not limited to the specific embodiments above. The specific embodiments above are only exemplary rather than restrictive. Under the inspiration of this application, those skilled in the art may make many variations without departing from the essence and the scope of protection of this application, which, however, still fall within the scope of protection of this application.

## Claims

1. A method for updating a model, comprising:
obtaining, by a first communication device, model updating information; and
updating, by the first communication device, a time series prediction model used by the first communication device according to the model updating information, the time series prediction model being used for executing a prediction task, wherein
the model updating information comprises at least one of the following:
updating information of a kernel function;
updating information of model hyper-parameters;
updating information of a prediction mode; and
updating information of a computing mode.

2. The method according to claim 1, wherein the obtaining, by a first communication device, model updating information comprises:
receiving, by the first communication device, the model updating information from a second communication device.

3. The method according to claim 2, wherein before the receiving, by the first communication device, the model updating information from a second communication device, the method further comprises:
transmitting, by the first communication device, model updating request information to the second communication device, the model updating request information being used for requesting to obtain first updating information, wherein
the model updating information comprises at least one of the following:
the first updating information; and
second updating information except the first updating information.

4. The method according to claim 3, wherein the transmitting, by the first communication device, model updating request information to the second communication device comprises:
transmitting, by the first communication device, the model updating request information to the second communication device according to first information,
the first information comprising at least one of the following:
prediction errors of the time series prediction model;
statistical information of prediction errors of the time series prediction model;
mobility information of the first communication device;
statistical information of prediction results of the time series prediction model; and
environmental perception information.

5. The method according to claim 3, wherein the transmitting, by the first communication device, model updating request information to the second communication device comprises:
transmitting, by the first communication device, the model updating request information to the second communication device in a case that a first condition is satisfied,
the first condition comprising at least one of the following:
that the first communication device has received model updating instruction information transmitted by the second communication device;
that a prediction task of the time series prediction model has been updated; and
that a prediction performance requirement of the time series prediction model has been updated.

6. The method according to claim 5, wherein the prediction performance requirement comprises at least one of prediction accuracy and computing delay.

7. The method according to claim 2, further comprising:
transmitting, by the first communication device, first capacity information to the second communication device, the first capacity information being used for indicating at least one of the following:
a kernel function supported by the first communication device;
whether the first communication device has a prediction task;
a model optimizer configuration supported by the first communication device;
a model training configuration supported by the first communication device; and
a model prediction configuration supported by the first communication device.

8. The method according to claim 2, further comprising:
receiving, by the first communication device, a first model configuration from the second communication device; and
transmitting, by the first communication device, first feedback information to the second communication device, the first feedback information being used for indicating whether the first communication device supports a time series prediction model instructed by the first model configuration.

9. The method according to claim 2, further comprising:
transmitting, by the first communication device, computing capacity information to the second communication device, the computing capacity information being used for indicating a computing capacity of the first communication device; and
receiving, by the first communication device, a second model configuration from the second communication device, a time series prediction model instructed by the second model configuration being determined according to at least one of the computing capacity, a processing delay, and a prediction performance requirement of the time series prediction model.

10. The method according to claim 2, further comprising:
transmitting, by the first communication device, second information or updating recommendation information of the time series prediction model to the second communication device,
the model updating information being determined according to the second information.

11. The method according to claim 10, wherein the second information comprises at least one of the following:
statistical information of prediction results of the time series prediction model;
estimation errors of the time series prediction model;
statistical information of estimation errors of the time series prediction model;
model prediction errors of the time series prediction model;
statistical information of model prediction errors of the time series prediction model;
mobility information of the first communication device;
statistical information of noise; and
a prediction performance requirement of the time series prediction model.

12. The method according to claim 1, wherein the prediction mode comprises a structure of a time window for the prediction task, and the structure of the time window comprises at least one of the following:
a length of time units in a training window of the time series prediction model;
a length of time units in a prediction window of the time series prediction model;
an interval of adjacent time units in the training window of the time series prediction model; and
an interval of adjacent time units in the prediction window of the time series prediction model.

13. The method according to claim 2, wherein the first communication device stores a same prediction model list as the second communication device, and the prediction model list comprises identities of prediction modes.

14. The method according to claim 2, wherein the model updating information comprises updating information of the computing mode;
before the receiving, by the first communication device, the model updating information from a second communication device, the method further comprises:
transmitting, by the first communication device, second capacity information to the second communication device, the second capacity information comprising at least one of the following:
computing capacity information of the first communication device;
storage capacity information of the first communication device; and
computing unit configuration information of the first communication device.

15. The method according to claim 14, wherein the second capacity information further comprises at least one of the following:
a maximum data amount supported to be cached by the first communication device;
a maximum computing amount supported to be computed by the first communication device; and
a maximum number of parallel computing threads supported by the first communication device.

16. The method according to claim 1, wherein the updating information of the computing mode instructs to update the computing mode of the time series prediction model to a parallel computing mode, and the method further comprises:
receiving, by the first communication device, third information from a second communication device, the third information comprising at least one of the following:
a partitioning manner of a dataset;
selection of an optimization goal;
selection of a model optimizer;
an initial state of the model optimizer; and
a fusion manner of a plurality of sub-model prediction results.

17. The method according to claim 1, wherein the model updating information further comprises at least one of the following:
an identity of a prediction task to be updated;
an identity of a model to be updated; and
timestamp information for updating the model to be updated.

18. A method for updating a model, comprising:
transmitting, by a second communication device, model updating information to a first communication device, the model updating information being used for updating a time series prediction model used by the first communication device, the time series prediction model being used for executing a prediction task, wherein
the model updating information comprises at least one of the following:
updating information of a kernel function;
updating information of model hyper-parameters;
updating information of a prediction mode; and
updating information of a computing mode.

19. The method according to claim 18, wherein the transmitting, by a second communication device, model updating information to a first communication device comprises:
transmitting, by the second communication device, the model updating information to the first communication device according to fourth information,
the fourth information comprising at least one of the following:
prediction errors of the time series prediction model;
statistical information of model prediction errors of the time series prediction model;
mobility information of the first communication device;
statistical information of prediction results of the time series prediction model;
updating information of a prediction task of the time series prediction model;
updating information of a prediction performance requirement of the time series prediction model; and
environmental perception information.

20. The method according to claim 18, wherein before the transmitting, by a second communication device, model updating information to a first communication device, the method further comprises:
receiving, by the second communication device, model updating request information from the first communication device, the model updating request information being used for requesting to obtain first updating information,
the model updating information comprising at least one of the following:
the first updating information; and
second updating information except the first updating information.

21. The method according to claim 18, further comprising:
receiving, by the second communication device, first capacity information from the first communication device, the first capacity information being used for indicating at least one of the following:
a kernel function supported by the first communication device;
whether the first communication device has a prediction task;
a model optimizer configuration supported by the first communication device;
a model training configuration supported by the first communication device; and
a model prediction configuration supported by the first communication device.

22. The method according to claim 18, further comprising:
transmitting, by the second communication device, a first model configuration to the first communication device; and
receiving, by the second communication device, first feedback information from the first communication device, the first feedback information being used for indicating whether the first communication device supports a time series prediction model instructed by the first model configuration.

23. The method according to claim 18, further comprising:
receiving, by the second communication device, computing capacity information from the first communication device, the computing capacity information being used for indicating a computing capacity of the first communication device; and
transmitting, by the second communication device, a second model configuration to the first communication device, a time series prediction model instructed by the second model configuration being determined according to at least one of the computing capacity, a processing delay, and a prediction performance requirement of the time series prediction model.

24. The method according to claim 18, further comprising:
receiving, by the second communication device, second information or updating recommendation information of the time series prediction model from the first communication device,
the model updating information being determined according to the second information.

25. The method according to claim 24, wherein the second information comprises at least one of the following:
statistical information of prediction results of the time series prediction model;
estimation errors of the time series prediction model;
statistical information of estimation errors of the time series prediction model;
model prediction errors of the time series prediction model;
statistical information of model prediction errors of the time series prediction model;
mobility information of the first communication device;
statistical information of noise; and
a prediction performance requirement of the time series prediction model.

26. The method according to claim 18, wherein the prediction mode comprises a structure of a time window for the prediction task, and the structure of the time window comprises at least one of the following:
a length of time units in a training window of the time series prediction model;
a length of time units in a prediction window of the time series prediction model;
an interval of adjacent time units in the training window of the time series prediction model; and
an interval of adjacent time units in the prediction window of the time series prediction model.

27. The method according to claim 18, wherein the second communication device stores a same prediction model list as the first communication device, and the prediction model list comprises identities of prediction modes.

28. The method according to claim 18, wherein the model updating information comprises updating information of the computing mode;
before the transmitting, by a second communication device, model updating information to a first communication device, the method further comprises:
receiving, by the second communication device, second capacity information from the first communication device, the second capacity information being used for indicating at least one of the following:
computing capacity information of the first communication device;
storage capacity information of the first communication device; and
computing unit configuration information of the first communication device.

29. The method according to claim 28, wherein the second capacity information further comprises at least one of the following:
a maximum data amount supported to be cached by the first communication device;
a maximum computing amount supported to be computed by the first communication device; and
a maximum number of parallel computing threads supported by the first communication device.

30. The method according to claim 18, wherein the updating information of the computing mode instructs to update the computing mode of the time series prediction model to a parallel computing mode, and the method further comprises:
transmitting, by the second communication device, third information to the first communication device, the third information comprising at least one of the following:
a partitioning manner of a dataset;
selection of an optimization goal;
selection of a model optimizer;
an initial state of the model optimizer; and
a fusion manner of a plurality of sub-model prediction results.

31. The method according to claim 18, wherein the model updating information further comprises at least one of the following:
an identity of a prediction task to be updated;
an identity of a model to be updated; and
timestamp information for updating the model to be updated.

32. An apparatus for updating a model, comprising an acquisition module and an updating module,
the acquisition module being configured to obtain model updating information;
the updating module being configured to update a time series prediction model used by the first communication device according to the model updating information, the time series prediction model being used for executing a prediction task, wherein
the model updating information comprises at least one of the following:
updating information of a kernel function;
updating information of model hyper-parameters;
updating information of a prediction mode; and
updating information of a computing mode.

33. An apparatus for updating a model, comprising a transmitting module,
the transmitting module being configured to transmit model updating information to a first communication device, the model updating information being used for updating a time series prediction model used by the first communication device, the time series prediction model being used for executing a prediction task, wherein
the model updating information comprises at least one of the following:
updating information of a kernel function;
updating information of model hyper-parameters;
updating information of a prediction mode; and
updating information of a computing mode.

34. A communication device, comprising a processor and a memory, the memory storing a program or an instruction executable on the processor, the program or the instruction, when executed by the processor, implementing the steps of the method for updating a model according to any one of claims 1 to 31.

35. A readable storage medium, storing a program or an instruction, the program or the instruction, when executed by a processor, implementing the steps of the method for updating a model according to any one of claims 1 to 31.
